# EUROPEAN PATENT SPECIFICATION

(11) **EP 2 930 229 B1**
(45) Date of publication and mention of the grant of the patent: **23.12.2020**
(21) Application number: 14164110.0
(22) Date of filing: 09.04.2014
(51) Int. Cl.: C10M 137/08, C10M 133/50, C10M 133/04, C10M 133/08, C10M 173/00, C07F 9/11, C07F 9/09, C10N 30/06, C10N 30/12, C10N 30/16, C10N 30/18, C10N 40/20

(54) **BORON-FREE CORROSION INHIBITORS FOR METALWORKING FLUIDS**
BORFREIE KORROSIONSINHIBITOREN FÜR METALLBEARBEITUNGSFLÜSSIGKEITEN
INHIBITEURS DE CORROSION EXEMPTS DE BORE POUR FLUIDES DE TRANSFORMATION DES MÉTAUX

(43) Date of publication of application: 14.10.2015
(73) Proprietor: Italmatch SC, LLC, Bedford Park IL 60638 (US)
(72) Inventor: Anderson, Steven, Church Lawton Cheshire ST7 3BG (GB); Williams, Carl, Newcastle under Lyme, Staffordshire (GB)
(74) Representative: SSM Sandmair

(56) References cited:
- WO-A1-2010/004118
- GB-A- 1 319 121
- US-A- 2 420 328
- US-A- 2 728 647
- US-A- 3 035 905
- US-A- 3 203 895
- US-A- 3 324 182
- US-A- 3 361 668
- US-A- 3 933 658
- US-A- 4 774 351
- US-A- 5 039 713
- US-A- 5 650 097
- US-A- 6 103 675
- US-A- 6 111 054
- US-H1- H2 233

## Description

The present invention relates to a corrosion inhibiting composition useful for metalworking fluids, as well as concentrates, additives and metalworking fluids containing the composition of the invention. The invention furthermore relates to the use of the composition for providing to a metalworking fluid one or more of anticorrosion performance, antifoam performance, antiwear performance, load carrying capacity, long fluid life, biological stability, lubricity, hard water tolerance, formulation stability.

Metalworking conditions promote corrosion of the metal surfaces involved. This is particularly relevant for ferrous metal, but not restricted thereto, e.g. copper may suffer from serious corrosion damage upon metalworking without adequate corrosion protection. Therefore, metalworking fluids usually contain corrosion inhibitors to protect the metal surfaces from corrosion. Metalworking fluids for machining ferrous and non-ferrous metals such as copper or aluminum and their alloys, are generally water-based soluble oils, that upon dispersion in water, form transparent, translucent, semi-translucent or milky emulsions. The oil employed is usually mineral oil based and often contains such additives as natural fatty oils, synthetic esters or naturally sourced fatty acids, e.g. those that are biodegradeable. Said emulsions are susceptible to biological attack and are therefore generally treated with anti-microbial additives (biocides). Mineral oil containing water miscible products generally contain emulsifier additives and hence can suffer from biological attack and have poor longevity because the emulsified phase containing the mineral oil tends to separate out. Metalworking fluids often make use of amine borate containing corrosion inhibitors. Amine borate containing corrosion inhibitors are known to provide very good corrosion inhibition and, in addition have biocidal activity. Such activity is in principle desirable as metalworking fluids contain contain water and oil - and thus, are prone to biological growth. Microbiological contamination within a metalworking fluid has detrimental effect on the life of the fluid as it degrades certain components of the fluid (such as sodium petroleum sulphonates). The use of amine borate corrosion inhibitors therefore reduces the biocide requirements for the metalworking fluid.

However, amine borates are known to have a negative environmental impact, cause health hazards and are generally undesirable in industrial applications. Consequently, there is a need for the reduction or elimination of the use of amine borates.

GB 1 319 121 discloses, for metalworking applications, an aqueous lubricant solution containing at least 0.01% by weight of an amine salt of a phenol adduct/phosphoric acid mono-ester, di-ester or mixture thereof, said phenol adduct being an ethylene oxide-phenol adduct wherein the ethylene oxide may, if desired, be in part replaced by a minor proportion by weight of another alkylene oxide and the adduct containing more than one alkylene oxide unit per molecule.

US 3,933, 658 discloses a metalworking composition and an additive for a metalworking composition which imparts extreme pressure, antiwear, and corrosion-inhibiting properties to the metalworking composition. The additive comprises a phosphate ester and a sulfur compound. The composition comprises the additive used in an oil-based vehicle.

US 3,361,668 discloses a process for preparing light colored and relatively non-corrosive, oil-soluble O,O'-phosphorodithioic acid diesters and metal salts prepared from such O,O'-phosphorodithioic acid diesters, particularly the zinc salts, and amines suitable for use in preparing said O,O'-phosphorodithioic acid diesters.

In the past, several amine corrosion inhibitors have been suggested to replace amine borates. Among these amines, dicyclohexylamine, 3-amino-4-octanol, monoethanolamine and triethanolamine have seen commercial application. However, corrosion inhibition of these inhibitors is generally attributed merely to their basic nature. Especially dicyclohexylamine faces a decline in acceptance due to it being a secondary amine, which in the presence of nitrites form nitrosamines which are known to be toxic. In addition, corrosion inhibition provided by these amine subsitutes generally did not live up to the performance shown by conventional amine borates. Thus, whereas there are a number of additives available that can provide some of the attributes of amine borates, there are to date no readily available alternatives that can be used in place of the amine borate derivatives to match all the attributes required and at the same time meet future environmental and health safety standards.

To address this, a compound is needed that works as a boron-free corrosion inhibitor and provides corrosion inhibition, biostability, hard water tolerance, low foam, formulation stabilization and lubricity.

As a solution to one or more of the above mentioned objects, the present invention discloses a composition comprising one or more amines according to Formula (I): 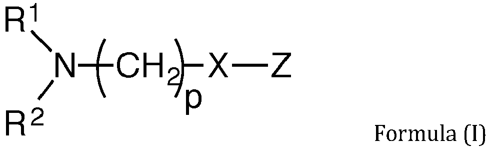 and one or more acid phosphates according to Formula (III), capable of forming a salt with an amine according to formula (I), 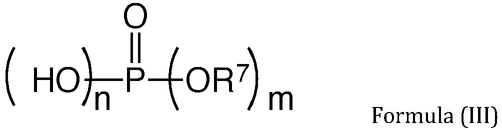 wherein
R⁷ is linear or branched (poly)oxyalkylene having a molecular weight in the range from 45 to 800, n being 1 or 2, m being 1 or 2, and n+m being 3,
wherein X is selected from O and NR³, Z is -(CH₂)_{q}-N(R⁵)R⁶, p is an integer from 1 to 5, q is an integer from 1 to 5, R¹, R², R³, R⁵, R⁶ are independently selected from linear, or branched C1-4 alkyl, hydroxyalkyl or alkoxyalkyl, or R¹ and R² or R⁵ and R⁶ together form a cyclic morpholino group; provided that the amines according to Formula (I) do not comprise a terminal secondary amino group.

Preferred compositions according to the present invention may comprise one or more amines according to Formula (II) 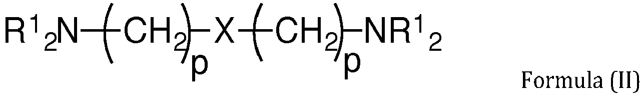 and one or more acid phosphates capable of forming a salt with an amine according to formula (II), wherein X is selected from 0 and NR³, p is an integer from 1 to 5, R¹ and R³ are indepentently selected from linear or branched C1-4 alkyl, hydroxyalkyl or alkoxyalkyl, or two R¹ moieties together form a cyclic morpholino group. In particular R¹ and/or R³ may be methyl. The composition is generally made by combining both components and any eventual additives or adding both components and any eventual additives to a liquid.

It is to be understood that a portion or all of the amine will react with a portion or all of the acid phosphate forming a phosphate amine salt, also known as ammonium phosphate salt.

The phosphate amine salt may be described by Formula (IV), 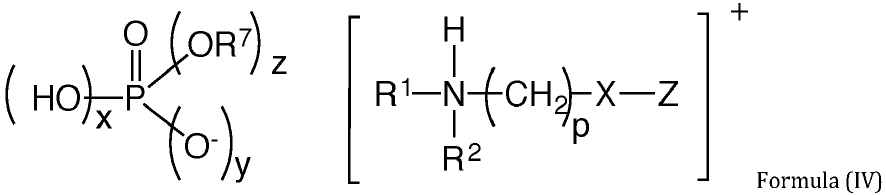 obtainable by combining one or more acid phosphates according to Formula (III) and one or more amines according to formula (I), wherein R¹, R², R⁷, X, Z and p are as defined above, and x is 0 or 1, y is 1 or 2, z is 1 or 2 and x+y+z is 3. It is to be understood that formula (IV) does not restrict the presence of the quaternary nitrogen atom to one of an outer (terminal) amine function. In case X is NR³, the central nitrogen may as well be the position of protonation upon salting, as well as the group -(CH₂)q-N(R⁵)R⁶.

Accordingly, a preferred embodiment of the composition of the invention is described by Formula (V): 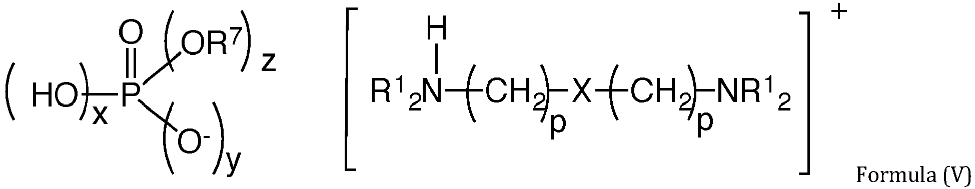 obtainable by combining one or more acid phosphates according to formula (III) and one or more amines according to formula (II), wherein R¹, R⁷, X and p are as defined above, and x is 0 or 1, y is 1 or 2, z is 1 or 2 and x+y+z is 3.

In a particularly preferred embodiment, R⁷ is represented by the following Formula (VI): 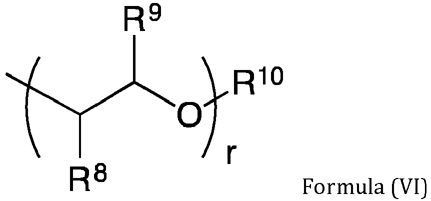 Wherein R⁸ and R⁹ are independently hydrogen or C1-4 alkyl, in particular hydrogen or methyl, R¹⁰ is C1-36 linear, or branched alkyl, cycloalkyl, alkenyl, cycloalkenyl, aryl or aralkyl, in particular linear or branched C1-C18 alkyl, very preferably C8-10 alkyl, r is an integer from 1 to 10, preferably from 2 to 8, in particular from 3 to 5.

Within the meaning of the composition of the invention is therefore a composition comprising a phosphate amine salt or mixture of phosphate amine salts, in particular of phosphate amine salts according to Formula (IV) or Formula (V), obtainable by combining one or more acid phosphates, preferably according to Formula (III) and one or more amines according to Formula (I) or Formula (II).

The relative amounts of acid phosphate, preferably according to Formula (III), and amine according to Formula (I) or (II) may vary in the range of 0.6:1 to 1.4:1 (wt/wt) phosphate to amine, preferably 0.8:1 to 1.2:1(wt/wt) phosphate to amine, more preferably 0.9:1 to 1.1:1. Particularly preferred is a ratio of 1:1(wt/wt) phosphate to amine. Often the acid phosphate will be employed as a mixture of mono- and divalent acid. The molar ratio of monovalent to divalent is preferably in the range of 1:0.1 up to 1:1.5, in particular 1:0.2 up to 1:1 and particularly preferred 1:0.4 up to 1:0.8. The addition of amine to the acid phosphate (or vice versa) is referred to as "salting" in the art. The degree of salting determines whether the resulting compound is oversalted, undersalted or "neutral", i.e. resulting in equimolar amounts of ammonium ion derived from the amine of Formula (I) or Formula (II) and phosphate acid/deprotonated phosphate acid equivalents.

In a preferred embodiment, salting of the acid phosphate or mixture of acid phosphates with said one or more amine(s) of Formula (I) or Formula (II) results in a mixture comprising, on a relative weight basis, 50 to 90%, preferably 60 to 80%, more preferred 65 to 72%, e.g. about 70% or 63 to 69%, of the amine salt(s) and 50 to 10%, preferably 40 to 20%, more preferred 38 to 25%, e.g. about 30% or 31 to 37%, of unreacted free amine. Usually, the salted phosphate amine of the invention is a gel, often of high viscosity. However, the salted phosphate amine may be obtained as a crystalline or amorphous solid or as a liquid at normal conditions.

Very preferred acid phosphates to be employed in the present invention include those wherein R⁷ has a molecular weight of 200 to 400, such as between 300 and 350. The alkoxylated phosphate of Formula (II) may be prepared by reaction of phophorus pentoxide with a polyoxyalcohol R⁷OH, yielding a mixture of phosphate monoesters and diesters, reflected by indices n and m in Formula (II).

Useful phosphates include, but are not limited to:
Octyl/decyl ethoxylate phosphate
Octyl/decyl ethoxylate (4EO) phosphate
2-Ethylhexyl ethoxylate (3EO) phosphate
2-Ethylhexyl ethoxylate (2EO) phosphate
2-Ethylhexyl ethoxylate (4EO) phosphate
Decyl alcohol ethoxylate (4EO) phosphate
Decyl alcohol ethoxylate (6EO) phosphate
Isotridecanol ethoxylate (3EO) phosphate
Isotridecanol ethoxylate (6EO) phosphate
Isotridecanol ethoxylate (5EO) phosphate
Isotridecanol ethoxylate (10EO) phosphate
Isotridecanol ethoxylate (20EO) phosphate
Tergitol 15-S-9 phosphate
C10-14 alcohol ethoxylate (3EO) phosphate
C12 alcohol ethoxylate (4EO) phosphate
C12-14 alcohol ethoxylate (4EO) phosphate
C12-15 alcohol ethoxylate (5EO) phosphate
Cetyl/stearyl alcohol ethoxylates (2EO) phosphate
Cetyl/oleyl alcohol ethoxylate (5EO) phosphate
Oleyl alcohol ethoxylate (4EO) phosphate
Alkyl phenol ethoxylate phosphate
Phenol ethoxylate (3EO) phosphate
Phenol ethoxylate (6EO) phosphate

Expressions such as "Octyl/decyl ethoxylate" used herein describe mixtures of octyl ethoxylate and decyl ethoxylate.

Amongst the most preferred phosphates are:
Octyl/decyl ethoxylate (4EO) phosphate
Decyl alcohol ethoxylate (4EO) phosphate
C12 alcohol ethoxylate (4EO) phosphate
C12-14 alcohol ethoxylate (4EO) phosphate

According to naming conventions in the art, the "alcohol"/"phenol" portion of the name reflects that the "alcohol ethoxylate" or "phenol ethoxylate" is the reaction product of an alcohol/phenol and ethylene oxide. Therefore, e.g. "decyl ethoxylate (4EO) phosphate" or "decyl alcohol ethoxylate (4EO) phosphate" or "decanol ethoxylate (4EO) phosphate" mean the same compound: C₁₀H₂₁O(C₂H₄O)ᵣ phosphate, wherein r is approximately 4. The naming convenion reflects the average number of repeating units, -OCH₂CH₂-, in the alcohol/phenol and ethylene oxide reaction product, R¹¹-(OCH₂CH₂)_{b}-OH, where R¹¹ is the alkyl portion of the initial alcohol/phenol. Small variations from the integer are meant to be covered. Therefore as an example, "4EO" comprises a sample having between "3.5" and "4.4" -OCH₂CH₂- repeating units, such as, in particular, 3.9 to 4.0" -OCH₂CH₂- repeating units.

The amine according to Formula (I) or Formula (II) employed has no terminal secondary nitrogen atom, as secondary amines may be a health hazard. Preferably, residues R¹ and R², may be the same or different and independently are each a linear or branched C1 to C5 alkyl or C1 to C5 hydroxyalkyl, n is preferably 2-5. Particularly suitable amines include:
Bis(N-dimethylaminopropyl)methylamine 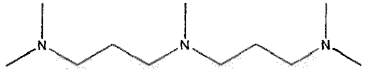
Bis(N-dimethylaminoethyl)methylamine 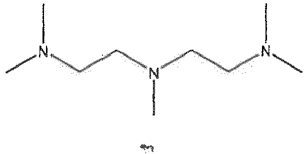
Bis(dimethylaminoethyl)ether 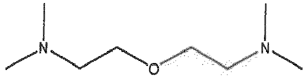
Bis(dimethylaminopropyl) ether 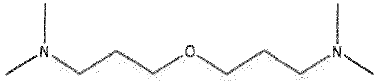
Bis(3 -dimethylaminopropyl)isopropanolamine 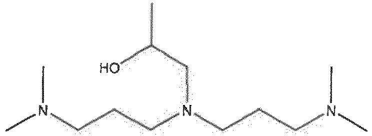
2-(2-dimethylaminoethoxyethyl)-methylamino-ethanol 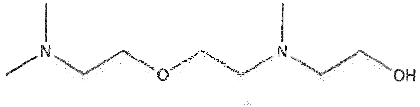
Bis(N-dimethylaminopropyl)amine

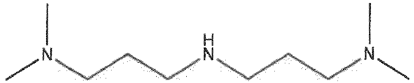

Preferred amines include:
Bis(N-dimethylaminopropyl)methylamine,
Bis(N-dimethylaminoethyl)methylamine,
Bis(dimethylaminoethyl)ether,
Bis(3-dimethylaminopropyl)isopropanolamine,

In compliance with the aforementioned phosphates and amines, very preferable phosphate amine salts include:
Octyl/decyl 4EO phosphate salted with
Bis(N-dimethylaminopropyl)methylamine, or
Bis(N-dimethylaminopropyl)methylamine, or
Bis(N-dimethylaminoethyl)methylamine, or
Bis(dimethylaminoethyl]ether, or
Bis(3-dimethylaminopropyl)isopropanolamine

Thus, in a particularly preferred amine phosphate salt according to the present invention, the amine is bis(N-dimethylaminopropyl)methylamine and the phosphate is obtained by the reaction of phosphorus pentoxide with octyl/decyl ethoxylate (4EO). The octyl/decyl ethoxylate (4EO) is obtained by the reaction of 4 moles of ethylene oxide for every 1 mole of C₈ and C₁₀ alcohol.

The inventors of the present invention have found that the composition of the present invention may be advantageously used in a metalworking fluid. The composition provides good anticorrosion performance, comparable or better than that observed with conventional amine borate corrosion inhibitors. In addition, it was surprisingly found that the compound of the invention provided good life to the metalworking fluid, comparable to that obtained with conventional amine borate based corrosion inhibitors - without the environmental concerns and health hazard associated with amine borates. The composition of the present invention was shown to inhibit or slow bacterial growth over extended periods of time. The long life functionality action of the composition of the present invention is considered a significant improvement compared to the environmental impact inherent to conventional bacteriocidal amine borate based corrosion inhibitors. Use of the composition of the present invention may in addition reduce the need to apply conventional biocides in metalworking.

The buffering properties of the composition of the present invention are equal or superior to conventional corrosion inhibitors used in metalworking fluids and add to the anticorrosive properties. The compositions of the present invention provide very good antiwear performance to a metalworking fluid combined with high load carrying capacity,
comparable or superior to corrosion inhibitors conventionally used in metalworking fluids.

These properties make the compositions of the present invention ideal corrosion inhibitors for metalworking fluids. They can be employed as an additive package, or as a component of an additive package for metalworking fluids. In this case the additive package is diluted to make the finished metalworking fluid. Thus, the present invention also relates to an additive package comprising 1 to 50, preferably 5 to 40, in particular 10 to 40, most preferably 25 to 30 wt% of a composition of a total of compounds of formulae (I), (III) and (IV). It is to be understood that the additive package may essentially consist of a composition of formulae (I) and (III) or (I), (III) and (IV), or (IV) alone. In preferred embodiments, accordingly, the additive package may essentially consist of a composition of formulae (II) and (III) or (II), (III) and (V), or (V) alone. In some embodiments, the additive package may comprise 1 to 50, preferably 5 to 40, in particular 10 to 40, most preferably 25to 30 wt% of a composition of formula (IV).

The additive package may further comprise 0-90, preferably 10-80 wt % of an oil, preferably a mineral oil such as API Group I (including naphthenic and paraffinic), API Group II (including paraffinic), with a viscosity grade from 10-50 cSt, preferably 20-40 cSt. The additive package may further comprise 0 to 50, and preferably 5 to less than 30 wt%, in particular less than 15 wt% of water. The additive package for metalworking fluid according to the present invention may further include one or more of additional conventional components such as additional corrosion inhibitor, biocides, fungicides, emulsifier, lubrication additives, couplers, solution stabilizers, antifoaming agents.

A typical additive package, or concentrate, of the present invention may be composed as follows (Table 1):

**Table 1**

| **Component/Function** | **% by weight** |
|---|---|
| Diluents | ∼10-12 |
| Lubricants | ∼40-50 |
| Corrosion Inhibitors | ∼27-29 |
| Emulsifiers | ∼8-9 |
| Alcohols | ∼5-6 |

An example of a suitable diluent is water.

Examples of suitable lubricants are, independently or a mixture of, polyricinoleic acid ester, fatty acid ester, triglycerides, EP/PO block copolymers, and polymeric esters available under the trade name Ketjenlube 135.

Examples of suitable corrosion inhibitors are octyl decyl 4EO phosphate salted with bis(N-diemethylaminopropyl)methylamine, alone or in combination, with other corrosion inhibitors such as amine carboxylates, tolytriazoles, benzotriazoles, thiadiazoles, calcium alkylbenzene sulfonates available under the trade name HiTEC® 614, and fatty acid alkanolamine available under the trade name Polartech Amide MA 460 TM.

Examples of suitable emulsifers are, independently or a mixture of two or more of, sulfonates, fatty acid amides, alcohol ether carboxylates available under the trade name Akypo RO 50 VG, alkyl ether carboxylates available as the trade name Akpo Tec AMVG, and ethoxylates, such as fatty acid ester alkoxylate available under the trade name Surfonic MW 100.

Examples of suitable alcohols are, independently or a mixture of two or more of, oelyl cetyl alchohol available under the trade name Synative AL 90/95 V and C₁₂-C₁₄ linear alcohol available under the trade name Synative AL S.

Accordingly, a specific non-limiting example of a typical additive package, or concentrate, of the present invention may be composed as follows (Table 2):

**Table 2**

| **Component** | **Function** | **% (by weight)** |
|---|---|---|
| Water | Diluent | 11.5 |
| Polartech LA 8005, polyricoleic acid ester | Lubricant | 45.7 |
| Octyl/decyl 4EO Phosphate ester salted with Bis (N-dimethylamino propyl) methylamine | Corrosion Inhibitor | 28.5 |
| Akypo RO 50 VG, alcohol ether carboxylate | Emulsifier | 8.6 |
| Synative AL S, C12-C14 linear alcohol | Alcohol | 5.7 |

The present invention also relates to the finished metalworking fluid comprising the composition of the present invention. The metalworking fluid may be manufactured by adding the composition or the additive packge of the present invention to a fluid. The finished metalworking fluid of the present invention comprises from1 to 20, preferably 2 to 8, most preferably 4-6 wt% or about 5 wt% of a composition of a total of compounds of formulae (I), (III) and (IV), preferably (II), (III) and (V). In some embodiments, the finished metalworking fluid may comprise 1 to 20, preferably 2 to 10, in particular 2 to 8, most preferably 4 to 6 wt% or about 5 wt% of a composition of formula (IV) or (V). The finished metalworking fluid may further comprise 0 to 90, preferably 1 to 80 wt%, of an oil, preferably a mineral oil such as API Group I (including naphethenic and/or paraffinic), API Group II (including paraffenic), with a vicosity grade from 10-50 cSt, preferably 20-40 cSt. Alternatively, or in addition, the finished metalworking fluid of the present invention may further comprise 0 to 60, and preferably 5 to less than 30 wt% water. A finished metalworking fluid containing a typical additive package, or concentrate, of the present invention may have the following physical parameters: density @ 15.6°C of 0.9- 1.2, total alkalinity between 10-15% as KOH, water content between 5-15%.

A finished metalworking fluid according to the invention may further include one or more of additional conventional components such as additional corrosion inhibitor, biocides, fungicides, emulsifier, lubrication additives, couplers, solution stabilizers, antifoaming agents.

A typical metalworking fluid of the present invention may e.g. be composed as follows (Table 3):

**Table 3**

| **Component/Function** | **% by weight** |
|---|---|
| Base Oil | ∼30-50 |
| Sulphonates | ∼3-5 |
| Fatty acids | ∼7-10 |
| Alcohols | ∼4-6 |
| pH neutralizers | ∼7-10 |
| Metal passivators | ∼0-1 |
| Lubricants | ∼8-10 |
| Corrosion Inhibitor (invention) | ∼4-6 |
| Other corrosion inhibitors | ∼0-7 |
| Emulsifiers | ∼.1-1 |
| Fungicides | ∼.1-1 |
| Diluents | ∼20-25 |
| Antifoams | ∼.1-.5 |

An example of a suitable base oils is a naphthenic mineral oil available under the trade name Nynas T22.

An example of a suitable sulphonate is sodium petroleum sulphonate available under the trade name Petronate HL.

Examples of suitable fatty acids are, independently or a mixture of two or more of, tall oil fatty acid available under the trade name Sylfat 2 and monocarboxylic C₁₀ acid available under the trade name of Versatic 10, oleic acid.

Examples of suitable alcohols are, independently or a mixture of two or more of, oelyl cetyl alchohol available under the trade name Synative AL 90/95 V, and C₁₂-C₁₄ linear alcohol available under the trade name Synative AL S.

Examples of suitable amines are, independently or a mixture of two or more of, monoisopropanolamine, diethanolamine, and triethanolamine.

Examples of suitable metal passivators are, independently or a mixture of two or more of, tolytriazole available under the trade anme Polartech Multitech Cu and benzotriazole available under the trade name Irgamet 42.

Examples of suitable lubricants are, independently or a mixture of, polyricinoleic and polymeric ester available under the trade name Ketjenlube 135 .

Examples of suitable corrosion inhibitors are octyl decyl 4EO phosphate salted with bis(N-diemethylaminopropyl)methylamine, alone or in combination with other corrosion inhibitors, such as amine carboxylates, tolytriazoles, benzotriazoles, thiadiazoles, calcium alkylbenzene sulfonates available under the trade name HiTEC® 614, and fatty acid alkanolamine available under the trade name Polartech Amide MA 460 TM.

Examples of suitable emulsifers are, independently or a mixture of two or more of, sulfonates, fatty acid amides, alcohol ether carboxylates available under the trade name Akypo RO 50 VG, alkyl ether carboxylates available as the trade name Akpo Tec AMVG, and ethoxylates, such as fatty acid ester alkoxylate available under the trade name Surfonic MW 100.

An example of suitable fungicides may be independently or a mixture of two or more of triazine, nitromorpholine, bromonitriles.

An example of a suitable diluent may be water.

Examples of suitable antifoams are, independently or a mixture of two or more of, silicone antifoams available under the trade names Foamban MS525 and Tego MR2124.

Accordingly, a specific non-limiting example of a typical metalworking fluid of the present invention may e.g. be composed as follows (Table 4):

**Table 4**

| **Component** | **Function** | **% (by weight)** |
|---|---|---|
| Nynas T22, Napthenic base oil | Mineral Oil | 31.80 |
| Petronate HL, Sodium petroleum sulphonate | Sulphonate | 4.00 |
| Polartech Amide MA 460 TM, Fatty acid alkanolamine | Amide | 4.00 |
| Sylfat 2, Tall oil fatty acid | Fatty Acid | 4.00 |
| Synative AL 90/95 V, Oleyl cetyl alcohol | Alcohol | 5.00 |
| Monoisopropanolamine | Amine | 6.00 |
| Versatic 10, Monocarboxylic C10 acid | Fatty Acid | 4.00 |
| Triethanolamine, 99% | Amine | 2.80 |
| Polartech Multitect Cu, Tolytriazole | Metal passivator | 0.50 |
| Polartech LA 8005, polyricinoleic acid Ester, | Lubricant | 6.00 |
| X 18805, Octyl/decyl 4EO Phosphate ester salted with - Bis(N-dimethylaminopropyl) methylamine | Corrosion Inhibitor | 5.00 |
| Hitec 614, low base calcium alkylbenzene sulfonate | Corrosion Inhibitor | 1.00 |
| Ketjenlube 135, Polymeric ester | Lubricant | 3.50 |
| Akypo Tec AMVG, Alkyl Ether carboxylate | Emulsifier | 0.50 |
| IPBC 30% | Fungicide | 0.50 |
| Water | Diluent | 21.00 |
| Foamban MS525, Silicone antifoam | Antifoam | 0.20 |
| Tego MR2124, Silicone antifoam | Antifoam | 0.20 |

### Examples

### Example 1: Corrosion inhibition data

The following metalworking fluids, samples 1 to 6, were formulated to comparable pH (Table 5).

**Table 5**

| | Sample a inventive | Sample b inventive | Sample c reference | Sample d reference | Sample e reference | Sample f reference |
|---|---|---|---|---|---|---|
| Amine Borates | 0% | 0% | 0% | 0% | 100 wt% | 100 wt% |
| Amines | 50 wt% | 50 wt% | 50 wt% | 50 wt% | 0% | 0% |
| Ethoxylated phosphate ester | 50 wt% | 50 wt% | 50 wt% | 50 wt% | 0% | 0% |
| pH at 5% in DI water | 9.95 | 9.84 | 9.71 | 9.97 | | |
| Free amine | 36.36 wt% | 33.65 wt% | 20.87 wt% | 13.66 wt% | | |
| IP125 at 0.5% (vol/vol) | 0/3-3 | 0/3-3 | 0/3-3 | 0/5-3 | 0/1-4 | 0/2-4 |
| IP125 at 1.0% (vol/vol) | 0/1-3 | 0/1-2 | 0/2-3 | 0/4-3 | 0/1-1 | 0/1-4 |
| IP125 at 1.5% (vol/vol) | 0/1-2 | 0/1-2 | 0/1-3 | 0/1-3 | 0/1-1 | 0/1-4 |

| | | | | | | |
|---|---|---|---|---|---|---|
| Sample a contains bis(N-dimethylaminopropyl)methylamine; Sample b contains bis(dimethylaminoethyl) ether; Sample c contains 3-aminooctan-4-ol; Sample d contains dicyclohexylamine; Sample e contains BA70 M, an amine borate having a boron content of approximately 7% Sample f contains BA60 MX, an amine borate having a boron content of approximately 6% | | | | | | |

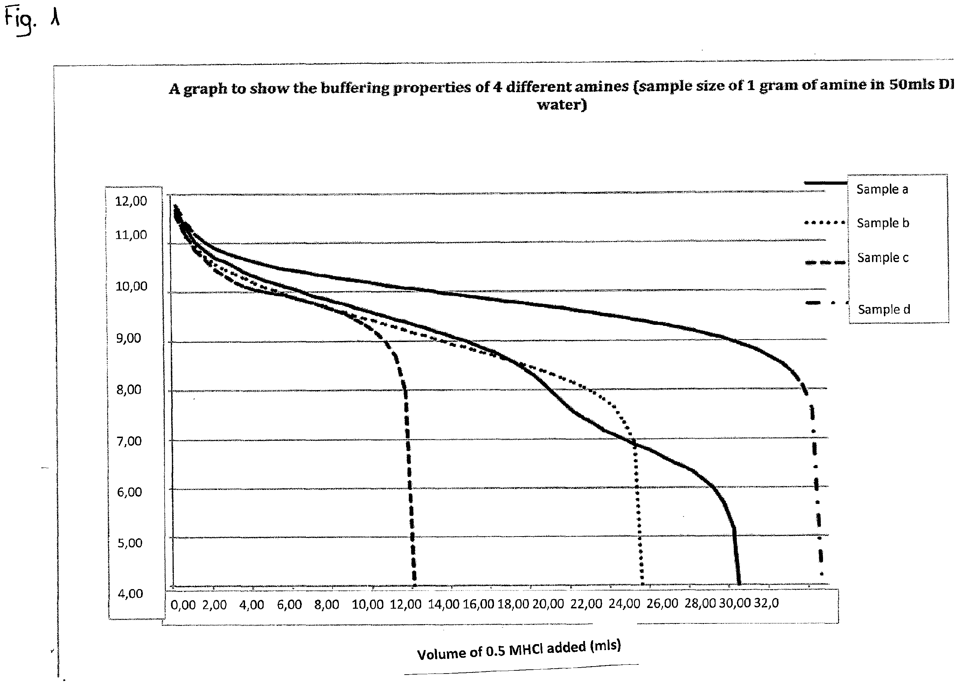

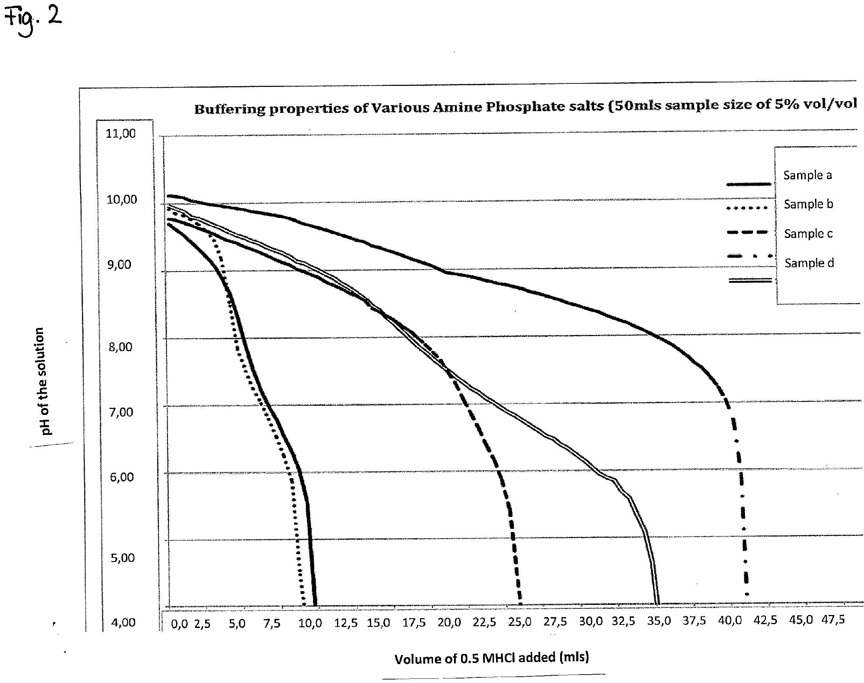

Corrosion was tested according to IP287, published January 2008, ref. IP287-2934869, at 0.5 wt%, 1.0 wt%, and 1.5 wt% in 200 ppm (water as CaCO₃) as well as according to IP125, published January 2008, ref. IP125-2935231, at 0.5 wt%, 1.0 wt%, and 1.5 wt% in 200 ppm (water as CaCO₃). The IP287 results are shown in Fig. 1. Fig. 2 shows the IP125 results. IP125 results were rated by a trained technican, and reported in table 3. The results are provided in the following form (0/3-3). The first digit - here it is 0 - is the number of pits. The lower the number, the better. The second digit - here it is 3 - is the % of the area stained. The lower the number, the better. The last digit - here it is 3- is the intensity of the staining. Again, the lower the number, the better.

IP 125 (reference standard: Institute of Petroleum Test Method IP 125/82) Key is as follows:-The first digit is the number of pits, the second, the area of staining, and the third the maximum intensity of staining e.g. 0/1-1 (Table 6).

**Table 6**

| Proportion of test area stained | | Intensity of staining | |
|---|---|---|---|
| | | | |
| 0 | Nil | 0 | Nil |
| 1 | Less than 10% | 1 | Hardly perceptible |
| 2 | Between 10 and 25% | 2 | Slight staining |
| 3 | Between 25 and 50% | 3 | Heavy staining |
| 4 | Between 50 and 75% | 4 | Surface damage (not including pits |
| 5 | Over 75% | | |

It follows that the samples according to the invention show at least the corrosion inhibition of conventional corrosion inhibitors on the basis of amine borates. The samples of the present invention show corrosion inhibition that is superior to that of conventional amine corrosion inhibitors.

### Example 2: Buffering Properties of Amines

Amine buffering is the amount of a standardized acid (such as 0.5M HCl) required to reduce the pH of a fixed volume of solution from its starting pH to a pH of 4). The results below reflect testing conditions carried out at approximately 20°C. Fig.1 shows the results of the amine buffering properties test for the samples a-d, the samples containing boron free corrosion inhibitors.

### Example 3: Corrosion Inhibition by Amines

**Table 7**

| | Sample a inventive | Sample b inventive | Sample c reference | Sample d reference |
|---|---|---|---|---|
| Amine | 50 wt% | 50 wt% | 50 wt% | 50 wt% |
| pH at 0.1M | 11.5 | 11.3 | 11.4 | - |
| IP125 at 0.5% (vol/vol) | 0/3-4 | 0/2-4 | 0/4-4 | - |
| IP125 at 1.0% (vol/vol) | 0/2-4 | 0/2-4 | 0/2-4 | - |
| IP125 at 1.5% (vol/vol) | 0/2-4 | 0/2-4 | 0/1-4 | - |

The amine corrosion is to evaluate the potential for machine tools and components to rust during manufacturing operations where dilutions of the metalworking fluid are used. It involves using a cast iron plate to which approximately 2 g of steel millings are added to the plate before being covered with approximately 2 ml of test fluid and left in a humidity cabinet for a fixed period of time. Table 7 shows the results of the amine corrosion test according to IP287 at 0.5 wt%, 1.0 wt%, and 1.5 wt% (vol/vol) for a period of 16 hours. Fig. 5 shows the results of IP125 at 0.5 wt%, 1.0 wt%, and 1.5 wt% (vol/vol) for a period of 16 hours.

### Example 4: Buffering Properties of Phosphate Amine Salt

The results are shown in Fig. 2.

### Example 5: Reichert Wear Test

The Reichert Friction Wear Test is a method designed to evaluate, in terms of lubrication, a metal working fluid. The test apparatus, consists of an electrical motor, a double armed lever system, to apply a load (typically 1500g) to a stationary test pin, which is kept in sliding contact with a revolving steel ring that is partially immersed in the test lubricant. The volume of the sample is 25 ml. When the device is operated at a speed of 1.7 m/sec, a thin film of the lubricant adheres to the surface of the ring to help reduce the friction. The test runs for 100 m. Due to the initial friction an elliptical shape is produced on the test pin. The area of the scar produced by the wear increases until it is wide enough to allow the fluid to produce a stable, lubricating film between the ring and the test pin; at this point a drop off in noise can be heard and the distance recorded. When the test is over, the width and the length of the scar on the test pin is measured to calculate the area of the scar (Area of ellipse (A), mm² Length x Width x 0.785); the relationship between the load applied and the area of the scar gives the load carrying capacity (effectively pressure carried by the film of lubricant). The larger the load carrying capacity, the better the lubricant.

The results show that sample a has the best load carrying capacity and sample c the worst.

Reichert testings, using steel test pins on a steel ring with an applied load of 1500g were carried out at 0.5% concentration in deionised water, which equates to an additive level of 10% in a formulation which has then been diluted to 5%. The results are reported in Table 8.

**Table 8**

| Corrosion Inhibitor | Load Carrying Capacity g/mm² | Wear Ratio % | Noise Dropoff m | Average Scar Area mm² |
|---|---|---|---|---|
| BA70M | 92.74 | 84.9 | 100 | 32.3 |
| a | 99.87 | 72.4 | 100 | 30.0 |
| b | 91.53 | 68.9 | 100 | 32.8 |
| c | 88.44 | 95.25 | 100 | 33.9 |
| d | 93.03 | 89.78 | 100 | 32.3 |

Samples a, b, c, d were the same as in Example 1, except that samples c and d did not contain the acid phosphate.

### Example 6: 4-Ball Test

This test method, ASTM D4172-94, covers the determination of the load carrying properties of lubricating fluids. In this particular case it was used to evaluate the antiwear properties of the test fluids. The method was modified for testing solutions diluted in water as follows. The 4 ball test using 40kg fixed load for a fixed time of 60 secs, and a rotational speed of 1760rpm, were carried out at 0.5% concentration in DIW, which equates to an additive level of 10% in a formulation which has then been diluted to 5%. Two runs were carried out for each fluid and the average measurement of the scars on the surface of the three bottom balls taken, which was then approximated as a circular (assuming symmetry) area. The results are reported in Table 9.

**Table 9**

| Corrosion Inhibitor | Average Scar measurement (mm) | Approx. Scar Area (mm²) |
|---|---|---|
| BA70M | 1.65 x 1.71 | 2.22 |
| a | 0.36 x 0.39 | 0.11 |
| b | 0.36 x 0.40 | 0.11 |
| c | 1.87 x 1.75 | 2.57 |
| d | 1.80 x 1.70 | 2.41 |

Samples a, b, c, d were the same as in Example 5.

## Claims

1. A metalworking composition comprising one or more amines according to Formula (I) 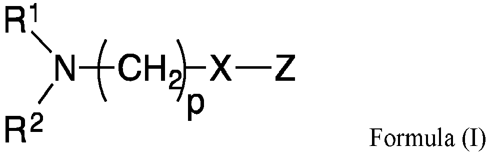 and one or more acid phosphates according to Formula (III), capable of forming a salt with an amine according to Formula (I), 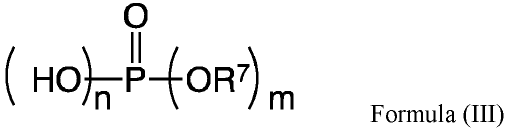 wherein
R⁷ is linear or branched (poly)oxyalkylene having a molecular weight in the range from 45 to 800, n being 1 or 2, m being 1 or 2, and n+m being 3,
wherein X is selected from O and NR³, Z is -(CH₂)_{q}-N(R⁵)R⁶, p is an integer from 1 to 5, q is an integer from 1 to 5, R¹, R², R³, R⁵, R⁶ are independently selected from linear, or branched C1-4 alkyl, hydroxyalkyl or alkoxyalkyl, or R¹ and R² or R⁵ and R⁶ together form a cyclic morpholino group;
provided that the amines according to Formula (I) do not comprise a terminal secondary amino group.

2. The composition according to claim 1 comprising one or more amines according to Formula (II) 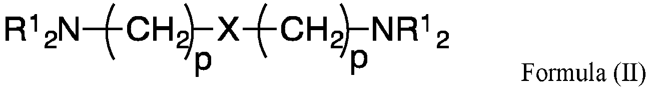 and one or more acid phosphates capable of forming a salt with an amine according to formula II, wherein X is selected from O and NR³, p is an integer from 1 to 5, R¹ and R³ are indepentently selected from linear or branched C1-4 alkyl, hydroxyalkyl or alkoxyalkyl, or two R¹ moieties together form a cyclic morpholino group.

3. The composition according to claim 1 or 2, comprising one or more amines according to Formula (II) 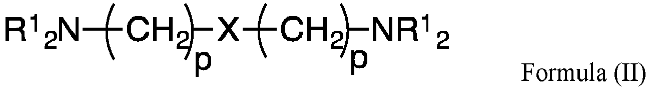 and one or more acid phosphates according to Formula (III), 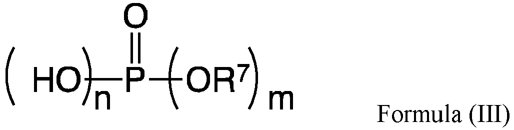 wherein
R⁷ is linear or branched (poly)oxyalkylene having a molecular weight in the range from 45 to 800, n being 1 or 2, m being 1 or 2, and n+m being 3, X is selected from O and NR³, p is an integer from 1 to 5, R¹ and R³ are independently selected from linear or branched C1-4 alkyl or alkoxyalkyl, or two R¹ moieties together form a cyclic morpholino group.

4. The composition of claim 1 wherein the composition comprises a phosphate amine salt or mixture of phosphate amine salts according to Formula (IV), 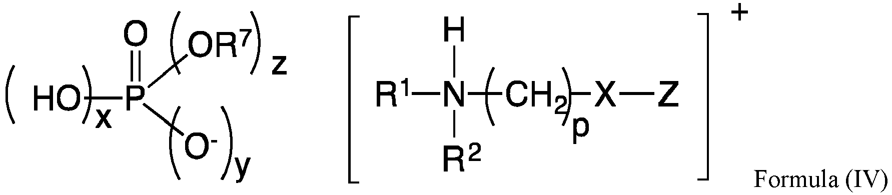 obtainable by combining one or more acid phosphates according to formula (III) and one or more amines according to formula (I), wherein R¹, R², R⁷, X, Z and p are as defined in claim 1, and x is 0 or 1, y is 1 or 2, z is 1 or 2 and x+y+z is 3.

5. The composition of claim 3 wherein the composition comprises a phosphate amine salt or mixture of phosphate amine salts according to Formula (V), 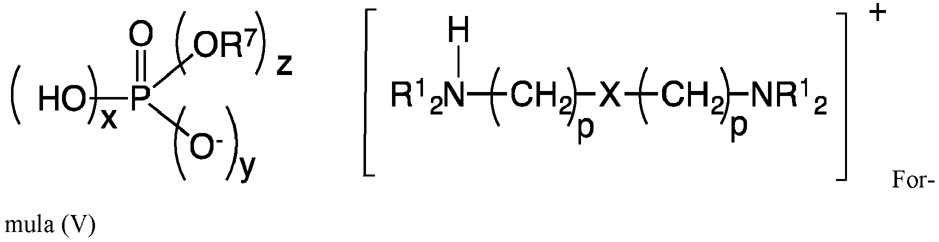 obtainable by combining one or more acid phosphates according to formula (III) and one or more amines according to formula (II), wherein R¹, R⁷, X and p are as defined in claim 3, and x is 0 or 1, y is 1 or 2, z is 1 or 2 and x+y+z is 3.

6. The composition according to any one of claims 1 to 5, wherein in the phosphate of Formula (III), R⁷ is represented by the following Formula (VI): 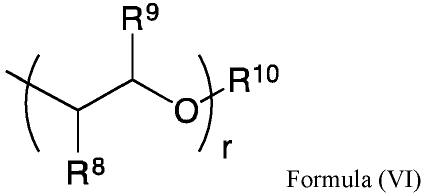 wherein R⁸ and R⁹ are independently hydrogen or C1-4 alkyl, in particular hydrogen or methyl, R¹⁰ is C1-36 linear, or branched alkyl, cycloalkyl, alkenyl, cycloalkenyl, aryl or aralkyl, in particular linear or branched C1-C18 alkyl, r is an integer from 1 to 10, preferably from 2 to 8, in particular from 3 to 5.

7. The composition according to any one of claims 1 to 6, wherein R⁷ has a molecular weight of 200 to 400, preferably between 300 and 350.

8. The composition according any one of claims 1 to 7, wherein p is an integer of from 2-4, in particular 2 or 3.

9. The composition according to any one of claims 1 to 8 wherein R¹ and/or R³ are methyl.

10. The composition according to any one of claims 1 to 9 wherein the phosphate is octyl/decyl 4EO phosphate.

11. The composition according to any one of claims 1 to 10, wherein the amine is selected from: Bis(N-dimethylaminopropyl)methylamine
Bis(N-aminopropyl)methylamine
Bis(N-dimethylaminoethyl)methylamine
Bis(N-aminoethyl)methylamine
Bis(dimethylaminoethyl)ether
Bis(dimethylaminopropyl)ether
Bis(3-dimethylaminopropyl)isopropanolamine
3-dimethylaminopropyldiisopropanolamine
N,N,N'-trimethyl-N'-hydroxyethyl-bisaminoethylether
N,N,N'-trimethylaminoethyl-ethanolamine
1,3-propane diamine, N'(3-(dimethylamino)propyl)-N,N-dimethyl

12. The composition according to any one of claims 1 to 11, wherein the amine is bis(N-dimethylaminopropyl)methylamine and the phosphate is obtained by the reaction of phosphorus pentoxide with octyl/decyl ethoxylate (4EO), and wherein the octyl/decyl ethoxylate (4EO) is obtained by the reaction of 4 moles of ethylene oxide for every 1 mole of C₈ and C₁₀ alcohol.

13. Composition according to any one of claims 4 or 5, comprising a total of 1 to 50 wt% of a composition consisting of compounds of formulae (I), (III), and (IV) or of formulae (II), (III), and (V), further comprising 0 to 90 wt% of an oil and 0 to 50 wt% of water.

14. Composition according to any one of claims 4 or 5, comprising 1 to 20 wt% of a composition consisting of compounds of formulae (I), (III) and (IV) or of formulae (II), (III), and (V), further comprising 0 to 90 wt% of an oil, and 0 to 60 wt% of water.

15. Use of a composition of any one of claims 1 to 14 for metalworking.

16. Use of a composition of any one of claims 1 to 14 for providing to a metalworking fluid one or more of anticorrosion performance, antifoam performance, antiwear performance, load carrying capacity, bacteriostatic performance, biological stability, lubricity, hard water tolerance, formulation stability.

## Patentansprüche

1. Metallbearbeitungszusammensetzung, umfassend ein oder mehr Amine gemäß Formel (I) 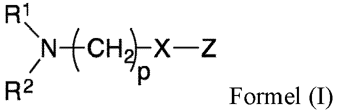 und ein oder mehr Säurephosphate gemäß Formel (III), welche zum Bilden eines Salzes mit einem Amin gemäß Formel (I) in der Lage sind, 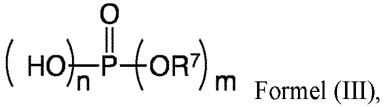 wobei
R⁷ lineares oder verzweigtes (Poly)oxyalkylen mit einem Molekulargewicht im Bereich von 45 bis 800 ist, n 1 oder 2 ist, m 1 oder 2 ist, und n+m 3 ist,
wobei X aus O und NR³ ausgewählt ist, Z-(CH₂)_{q}-N(R⁵)R⁶ ist, p eine ganze Zahl von 1 bis 5 ist, q eine ganze Zahl von 1 bis 5 ist, R¹, R², R³, R⁵, R⁶ unabhängig voneinander aus linearem oder verzweigtem C1-4-Alkyl, -Hydroxyalkyl oder -Alkoxyalkyl ausgewählt sind, oder R¹ und R² oder R⁵ und R⁶ zusammen eine cyclische Morpholinogruppe bilden;
mit der Maßgabe, dass die Amine gemäß Formel (I) keine terminale sekundäre Aminogruppe umfassen.

2. Zusammensetzung gemäß Anspruch 1, umfassend ein oder mehr Amine gemäß Formel (II) 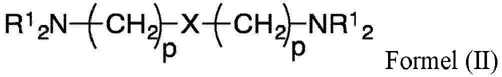
und ein oder mehr Säurephosphate, welche zum Bilden eines Salzes mit einem Amin gemäß Formel (II) in der Lage sind,
wobei X aus O und NR³ ausgewählt ist, p eine ganze Zahl von 1 bis 5 ist, R¹ und R³ unabhängig voneinander aus linearem oder verzweigtem C1-4-Alkyl, -Hydroxyalkyl oder -Alkoxyalkyl ausgewählt sind, oder zwei Einheiten R¹ zusammen eine cyclische Morpholinogruppe bilden.

3. Zusammensetzung gemäß Anspruch 1 oder 2, umfassend ein oder mehr Amine gemäß Formel (II) 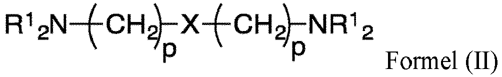 und ein oder mehr Säurephosphate gemäß Formel (III) 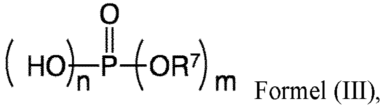 wobei
R⁷ lineares oder verzweigtes (Poly)oxyalkylen mit einem Molekulargewicht im Bereich von 45 bis 800 ist, n 1 oder 2 ist, m 1 oder 2 ist, und n+m 3 ist, X aus O und NR³ ausgewählt ist, p eine ganze Zahl von 1 bis 5 ist, R¹ und R³ unabhängig voneinander aus linearem oder verzweigtem C1-4-Alkyl oder -Alkoxyalkyl ausgewählt sind, oder zwei Einheiten R¹ zusammen eine cyclische Morpholinogruppe bilden.

4. Zusammensetzung nach Anspruch 1, wobei die Zusammensetzung ein Phosphataminsalz oder Gemisch von Phosphataminsalzen gemäß Formel (IV) umfasst, 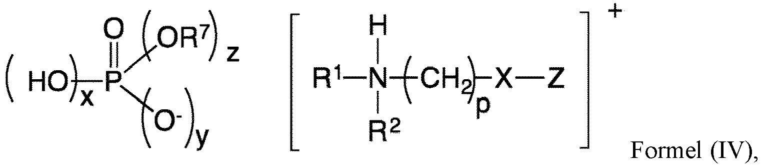 erhältlich durch Kombinieren von einem oder mehr Säurephosphaten gemäß Formel (III) und einem oder mehr Aminen gemäß Formel (I), wobei R¹, R², R⁷, X, Z und p wie in Anspruch 1 definiert sind, und x 0 oder 1 ist, y 1 oder 2 ist, z 1 oder 2 ist und x+y+z 3 ist.

5. Zusammensetzung nach Anspruch 3, wobei die Zusammensetzung ein Phosphataminsalz oder Gemisch von Phosphataminsalzen gemäß Formel (V) umfasst, 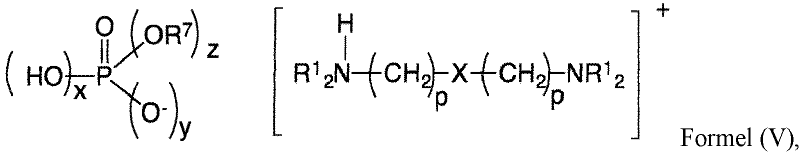 erhältlich durch Kombinieren von einem oder mehr Säurephosphaten gemäß Formel (III) und einem oder mehr Aminen gemäß Formel (II), wobei R¹, R⁷, X und p wie in Anspruch 3 definiert sind, und x 0 oder 1 ist, y 1 oder 2 ist, z 1 oder 2 ist und x+y+z 3 ist.

6. Zusammensetzung gemäß einem der Ansprüche 1 bis 5, wobei in dem Phosphat von Formel (III) R⁷ durch die folgende Formel (VI) dargestellt wird: 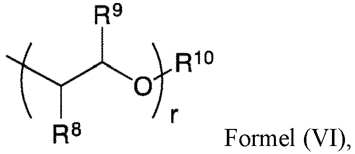 wobei R⁸ und R⁹ unabhängig voneinander Wasserstoff oder C1-4-Alkyl, insbesondere Wasserstoff oder Methyl, sind, R¹⁰ lineares oder verzweigtes C1-36-Alkyl, -Cycloalkyl, -Alkenyl, -Cycloalkenyl, -Aryl oder -Aralkyl, insbesondere lineares oder verzweigtes C1-C18-Alkyl, ist, r eine ganze Zahl von 1 bis 10, bevorzugt von 2 bis 8, insbesondere von 3 bis 5, ist.

7. Zusammensetzung gemäß einem der Ansprüche 1 bis 6, wobei R⁷ ein Molekulargewicht von 200 bis 400, bevorzugt zwischen 300 und 350, aufweist.

8. Zusammensetzung gemäß einem der Ansprüche 1 bis 7, wobei p eine ganze Zahl von 2-4, insbesondere 2 oder 3, ist.

9. Zusammensetzung gemäß einem der Ansprüche 1 bis 8, wobei R¹ und/oder R³ Methyl sind.

10. Zusammensetzung gemäß einem der Ansprüche 1 bis 9, wobei das Phosphat Octyl-/Decyl-4EO-phosphat ist.

11. Zusammensetzung gemäß einem der Ansprüche 1 bis 10, wobei das Amin ausgewählt ist aus: Bis(N-dimethylaminopropyl)methylamin
Bis(N-aminopropyl)methylamin
Bis(N-dimethylaminoethyl)methylamin
Bis(N-aminoethyl)methylamin
Bis(dimethylaminoethyl)ether
Bis(dimethylaminopropyl)ether
Bis(3-dimethylaminopropyl)isopropanolamin
3-Dimethylaminopropyldiisopropanolamin
N,N,N' -Trimethyl-N'-hydroxyethylbisaminoethylether
N,N,N'-Trimethylaminoethylethanolamin
1,3-Propandiamin, N'-(3-(Dimethylamino)propyl)-N,N-dimethyl.

12. Zusammensetzung gemäß einem der Ansprüche 1 bis 11, wobei das Amin Bis(N-dimethylaminopropyl)methylamin ist und das Phosphat durch die Umsetzung von Phosphorpentoxid mit Octyl-/Decylethoxylat (4EO) erhalten wird, und wobei das Octyl-/Decylethoxylat (4EO) durch die Umsetzung von 4 Mol Ethylenoxid mit jeweils 1 Mol C₈- und C₁₀-Alkohol erhalten wird.

13. Zusammensetzung gemäß einem der Ansprüche 4 oder 5, umfassend insgesamt 1 bis 50 Gew.-% einer Zusammensetzung, welche aus Verbindungen der Formeln (I), (III) und (IV) oder der Formeln (II), (III) und (V) besteht, ferner umfassend 0 bis 90 Gew.-% von einem Öl und 0 bis 50 Gew.-% Wasser.

14. Zusammensetzung gemäß einem der Ansprüche 4 oder 5, umfassend 1 bis 20 Gew.-% einer Zusammensetzung, welche aus Verbindungen der Formeln (I), (III) und (IV) oder der Formeln (II), (III) und (V) besteht, ferner umfassend 0 bis 90 Gew.-% von einem Öl und 0 bis 60 Gew.-% Wasser.

15. Verwendung einer Zusammensetzung nach einem der Ansprüche 1 bis 14 für Metallbearbeitung.

16. Verwendung einer Zusammensetzung nach einem der Ansprüche 1 bis 14, um einer Metallbearbeitungsflüssigkeit eines oder mehr von Antikorrosionsleistung, Antischaumleistung, Antiverschleißleistung, Tragfähigkeit, bakteriostatischer Leistung, biologischer Stabilität, Schmierfähigkeit, hartes Wasser-Toleranz, Formulierungsstabilität zu verleihen.

## Revendications

1. Composition pour le travail des métaux comprenant une ou plusieurs amines de formule (I) 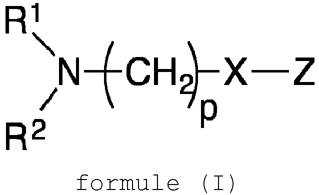 et un ou plusieurs phosphates acides de formule (III), capables de former un sel avec une amine de formule (I), 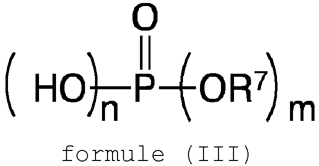 dans laquelle
R⁷ est un (poly)oxyalkylène linéaire ou ramifié ayant une masse moléculaire située dans la plage allant de 45 à 800, n vaut 1 ou 2, m vaut 1 ou 2, et n+m vaut 3,
X est choisi parmi O et NR³, Z est - (CH₂)_{q}-N(R⁵)(R⁶), p est un entier de 1 à 5, q est un entier de 1 à 5, R¹, R², R³, R⁵, R⁶ sont indépendamment choisis parmi un alkyle en C₁ à C₄ linéaire ou ramifié, un hydroxyalkyle ou un alcoxyalkyle, ou bien R¹ et R² ou R⁵ et R⁶ forment ensemble un groupe morpholino cyclique ;
sous réserve que les amines de formule (I) ne comprennent pas un groupe amino secondaire terminal.

2. Composition selon la revendication 1, comprenant une ou plusieurs amines de formule (II) 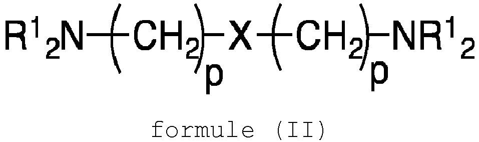
et un ou plusieurs phosphates acides capables de former un sel avec une amine de formule II,
dans laquelle X est choisi parmi O et NR³, p est un entier de 1 à 5, et R¹ et R³ sont indépendamment choisis parmi un alkyle en C₁ à C₄ linéaire ou ramifié, un hydroxyalkyle ou un alcoxyalkyle, ou bien deux fragments R¹ forment ensemble un groupe morpholino cyclique.

3. Composition selon la revendication 1 ou 2, comprenant une ou plusieurs amines de formule (II) 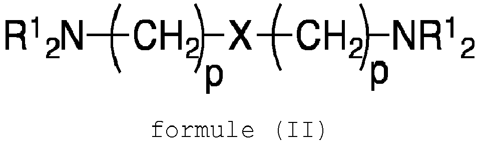 et un ou plusieurs phosphates acides de formule (III) 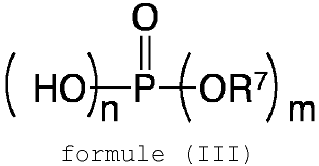 dans laquelle
R⁷ est un (poly)oxyalkylène linéaire ou ramifié ayant une masse moléculaire située dans la plage allant de 45 à 800, n vaut 1 ou 2, m vaut 1 ou 2, et n+m vaut 3, X est choisi parmi O et NR³, p est un entier de 1 à 5, et R¹ et R³ sont indépendamment choisis parmi un alkyle en C₁ à C₄ linéaire ou ramifié ou un alcoxyalkyle, ou bien deux fragments R¹ forment ensemble un groupe morpholino cyclique.

4. Composition selon la revendication 1, laquelle composition comprend un sel d'amine phosphate ou un mélange de sels d'amine phosphate de formule (IV), 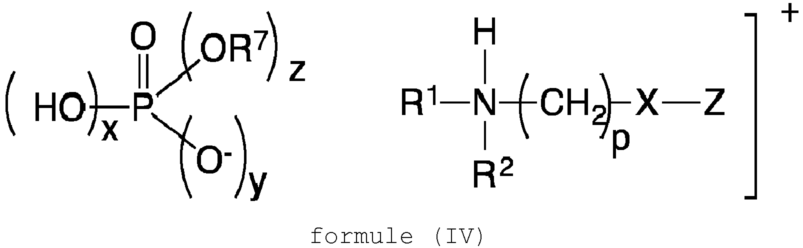 pouvant être obtenus par combinaison d'un ou plusieurs phosphates acides de formule (III) et d'une ou plusieurs amines de formule (I), dans laquelle R¹, R², R⁷, X, Z et p sont tels que définis dans la revendication 1, et x vaut 0 ou 1, y vaut 1 ou 2, z vaut 1 ou 2 et x+y+z vaut 3.

5. Composition selon la revendication 3, laquelle composition comprend un sel d'amine phosphate ou un mélange de sels d'amine phosphate de formule (V), 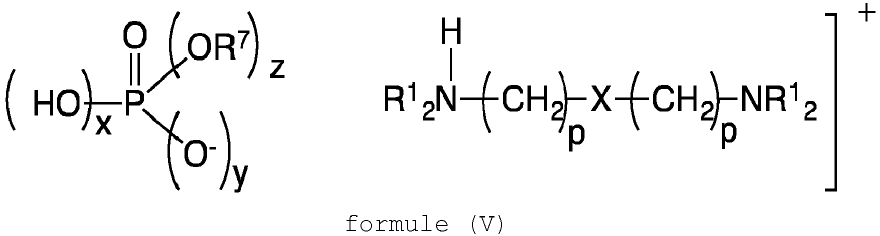 pouvant être obtenus par combinaison d'un ou plusieurs phosphates acides de formule (III) et d'une ou plusieurs amines de formule (II), dans laquelle R¹, R⁷, X et p sont tels que définis dans la revendication 3, et x vaut 0 ou 1, y vaut 1 ou 2, z vaut 1 ou 2 et x+y+z vaut 3.

6. Composition selon l'une quelconque des revendications 1 à 5, dans laquelle, dans le phosphate de formule (III), R⁷ est représenté par la formule (VI) suivante : 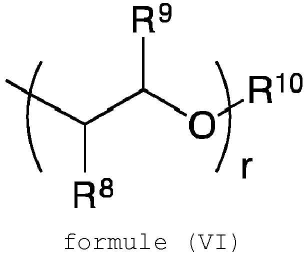 dans laquelle R⁸ et R⁹ sont indépendamment un hydrogène ou un alkyle en C₁ à C₄, en particulier un hydrogène ou méthyle, R¹⁰ est un alkyle en C₁ à C₃₆ linéaire ou ramifié, cycloalkyle, alcényle, cycloalcényle, aryle ou aralkyle, en particulier un alkyle en C₁ à C₁₈ linéaire ou ramifié, r est un entier de 1 à 10, de préférence de 2 à 8, en particulier de 3 à 5.

7. Composition selon l'une quelconque des revendications 1 à 6, dans laquelle R⁷ a une masse moléculaire de 200 à 400, de préférence comprise entre 300 et 350.

8. Composition selon l'une quelconque des revendications 1 à 7, dans laquelle p est un entier de 2 à 4, en particulier 2 ou 3.

9. Composition selon l'une quelconque des revendications 1 à 8, dans laquelle R¹ et/ou R³ sont méthyle.

10. Composition selon l'une quelconque des revendications 1 à 9, dans laquelle le phosphate est le phosphate d'octyle/décyle 4EO.

11. Composition selon l'une quelconque des revendications 1 à 10, dans laquelle l'amine est choisie parmi:
bis(N-diméthylaminopropyl)méthylamine
bis(N-aminopropyl)méthylamine
bis(N-diméthylaminoéthyl)méthylamine bis(N-aminoéthyl)méthylamine
bis(diméthylaminoéthyl) éther
bis(diméthylaminopropyl) éther
bis(3-diméthylaminopropyl) isopropanolamine
3-diméthylaminopropyldiisopropanolamine
N,N,N'-triméthyl-N'-hydroxyéthyl-bisaminoéthyléther
N,N,N'-triméthylaminoéthyl-éthanolamine
N'-(3-(diméthylamino)propyl)-N,N-diméthyl-1,3-propanediamine.

12. Composition selon l'une quelconque des revendications 1 à 11, dans laquelle l'amine est la bis(N-diméthylaminopropyl)méthylamine et le phosphate est obtenu par la réaction de pentoxyde de phosphore avec de l'éthoxylate d'octyle/décyle (4EO), et dans laquelle l'éthoxylate d'octyle/décyle (4EO) est obtenu par la réaction de 4 moles d'oxyde d'éthylène par mole d'alcool en C₈ et C₁₀.

13. Composition selon l'une quelconque des revendications 4 et 5, comprenant un total de 1 à 50 % en poids d'une composition consistant en des composés de formules (I), (III) et (IV) ou de formules (II), (III) et (V), comprenant en outre 0 à 90 % en poids d'une huile et 0 à 50 % en poids d'eau.

14. Composition selon l'une quelconque des revendications 4 et 5, comprenant 1 à 20 % en poids d'une composition consistant en des composés de formules (I), (III) et (IV) ou de formules (II), (III) et (V), comprenant en outre 0 à 90 % en poids d'une huile et 0 à 60 % en poids d'eau.

15. Utilisation d'une composition de l'une quelconque des revendications 1 à 14 pour le travail des métaux.

16. Utilisation d'une composition de l'une quelconque des revendications 1 à 14 pour apporter à un fluide de travail des métaux une ou plusieurs parmi une performance anticorrosion, une performance anti-mousse, une performance anti-usure, une capacité de charge, une performance bactériostatique, une stabilité biologique, un pouvoir lubrifiant, une tolérance à l'eau dure, une stabilité de formulation.
